# EUROPÄISCHE PATENTSCHRIFT

(11) **EP 1 454 694 B1**
(45) Veröffentlichungstag und Bekanntmachung des Hinweises auf die Patenterteilung: **14.06.2006**
(21) Anmeldenummer: 04400011.5
(22) Anmeldetag: 27.02.2004
(51) Int. Cl.: B23C 5/24, B23B 29/034, B23B 27/16

(54) **Verstellvorrichtung mit Verliersicherung**
Adjustment device with securing feature
Dispositif de réglage antiperte

(30) Priorität: 28.02.2003 DE 20303316 U
(43) Veröffentlichungstag der Anmeldung: 08.09.2004
(73) Patentinhaber: Gühring, Jörg, Dr., 72458 Albstadt (DE)
(72) Erfinder: Hänle, Peter, Dr., 72514 Inzigkofen (DE); Schlagenhauf, Uwe, 72479 Strassberg (DE)

(56) Entgegenhaltungen:
- DE-C- 10 060 283
- GB-A- 1 164 147
- US-A- 3 847 555

## Beschreibung

Die Erfindung betrifft ein Werkzeug, insbesondere ein drehangetriebenes Zerspanungswerkzeug und im besonderen ein Zerspanungswerkzeug zur Feinbearbeitung von Werkstücken, gemäß dem Oberbegriff des Anspruchs 1.

Zerspanungswerkzeuge, insbesondere zur Feinbearbeitung von Werkstücken, bei denen an einem Werkzeugkörper zumindest ein abnehmbar befestigter Schneideinsatz vorgesehen ist, sind hinlänglich bekannt, beispielsweise aus der DE 38 03 188 A1. Der Scheideinsatz in der Gestalt einer Polygon-Platte sitzt dabei in einer entsprechend geformten Tasche des Schneidenträgers und wird mittels einer Spannschraube, die den Schneideinsatz im wesentlichen zentrisch durchdringt, flächig gegen eine Bodenfläche der Tasche gedrückt.

Damit nach erfolgter Montage des Schneideinsatzes noch eine exakte Lagefixierung und Ausrichtung der Funktionsschneiden des Werkzeugs bezogen auf die Drehachse möglich wird, sind derartige Werkzeuge häufig mit einer Feineinstellvorrichtung ausgestattet. Der Schneideinsatz stützt sich dabei mit einer Seitenwand an einem Verstellelement ab, welches unter Zuhilfenahme einer Stellschraubenanordnung relativ zum Schneideinsatz verlagerbar ist. Derartige Feineinstellvorrichtungen sind beispielsweise aus der DE 195 21 599 A1, der JP 10-277839 A, der US 3,662,444 oder der DE 42 43 586 A1 bekannt. Anstelle einer Stellschraube wurden auch bereits Stellexzenter verwendet, wie beispielsweise aus der DE 29 48 250 C2 bekannt.

Ein Werkzeug gemäß dem Oberbegriff des Anspruchs 1 ist aus der DE 100 60 283 C1 bekannt geworden. Das Verstellelement ist dabei von einem Verstellbackenteil gebildet, welches ein durchgehendes Innengewinde besitzt und sich über eine halbzylindrische Außenfläche einer entsprechenden Ausnehmung im Schneidenträger abstützt. Die Stellschraubenanordnung ist von einer Differenzialschraube gebildet, die mit ihrem Außengewinde einer ersten Orientierung mit dem Innengewinde des Verstellelements und mit ihrem Gewindeabschnitt der anderen Orientierung mit einer Gewindebohrung im Schneidenträger in Eingriff steht. Die Differenzialschraube lässt sich alternativ entweder von der Seite des Schneideinsatzes oder aber - falls die Gewindebohrung im Schneidenträger durchgehend ausgebildet ist - von der Seite des mit dem Schneidenträger in Eingriff befindlichen Schraubenteils betätigen.

Mit dieser bekannten Feineinstellvorrichtung lassen sich zwar die erforderlichen Verstellungen des Schneideinsatzes, die hauptsächlich dazu dienen, Herstellungstoleranzen auf Seiten des Schneideinsatzes und/oder auf Seiten der in aufnehmenden Tasche auszugleichen, zuverlässig vornehmen. Es hat sich allerdings gezeigt, dass das Konzept der bekannten Feineinstellvorrichtung eine verhältnismäßig aufwendige Bearbeitung des Schneidenträgers erfordert. Dies wirkt sich insbesondere dann negativ aus, wenn die Werkzeuge einen verhältnismäßig kleinen Nenndurchmesser haben, oder beispielsweise dann, wenn besonders schwer zu zerspanende Materialien des Schneidenträgers zum Einsatz kommen.

Der Erfindung liegt deshalb die Aufgabe zugrunde, ein Werkzeug gemäß dem Oberbegriff des Anspruchs 1 derart weiterzubilden, dass sich auf für Werkzeuge mit kleinstem Nenndurchmesser und unter Bereitstellung eines wirtschaftlichen Herstellungsverfahrens eine Feinjustierung des Schneideinsatzes auch dann verwirklichen lässt, wenn im Bereich des Schneidenträgers besonders schwer zu zerspanende Stoffe, wie zum Beispiel Hartstoffe zum Einsatz kommen. Diese Aufgabe wird durch die Merkmale des Anspruchs 1 gelöst.

Erfindungsgemäß ist eine Gewindehülse der Stellschraubenanordnung lose in eine durchgehende Ausnehmung im Schneidenträger eingesetzt. Weil die Gewindehülse lose eingesetzt ist, kann die durchgehende Ausnehmung innenseitig glatt gestaltet sein. Die Gewindehülse ist von der dem Schneideinsatz zugewandten Seite in die durchgehende Ausnehmung eingesetzt und stützt sich an der Engstelle derart ab, dass die Stellschraubenanordnung durch die Engstelle hindurch betätigbar bleibt. Dieses Gestaltungskonzept erlaubt es, die durchgehende Innenausnehmung im Schneidenträger möglichst einfach, beispielsweise als glatte zylindrische Ausnehmung auszubilden. Die Feineinstellvorrichtung kann damit auch für Werkzeuge mit sehr kleinem Nenndurchmesser zum Einsatz kommen, ohne einen erheblichen zerspanungstechnischen Aufwand bei der Bearbeitung des Schneidenträgers in Kauf nehmen zu müssen. Die durchgehende und innenseitig glatte Ausnehmung lässt sich sehr wirtschaftlich herstellen, und zwar selbst dann, wenn auf Seiten des Schneidenträgers besonders schwer zu zerspanende Werkstoffe zum Einsatz kommen. Dies sind beispielsweise Hartstoffe, wie zum Beispiel Carbide, Nitride, Boride oder auch nicht-metallische Hartstoffe und Hartstoffsysteme, wie sie beispielsweise in Form von Mischcarbiden, Carbonnitriden, Carid-Borid-Kombinationen oder als Mischkeramik und Nitridkeramik bekanntgeworden sind. Derartige harte Werkstoffe sind oftmals Sinterwerkstoffe. Die erfindungsgemäße Ausgestaltung; der Feineinstellvorrichtung erlaubt es sogar, die durchgehende Ausnehmung im Schneidenträger bereits vor dem endgültigen Sinterprozess einzubringen, beispielsweise bereits beim Formpressvorgang oder nach einem Vorsinter-Verfahrensschritt. Dies ist deshalb möglich, weil die Stellschraubenanordnung in die durchgehende Ausnehmung des Schneidenträgers lose eingesetzt ist, so dass Maß- und/oder Toleranzabweichungen hinsichtlich Lage und Form der durchgehenden Innenausnehmung die Funktion der Feineinstellvorrichtung nicht wirksam beeinträchtigen können. Dabei ergibt sich mit dem erfindungsgemäßen Aufbau der besondere, zusätzliche Vorteil, dass die Komponenten der Feineinstellvorrichtung bei montiertem Schneideinsatz unverlierbar in der durchgehenden Ausnehmung des Schneidenträgers unterhalb des Schneideinsatzes gefangen sind. Selbst bei einer Lockerung der Vorspannkraft des Verstellelements, wie sie beispielsweise durch Vibrationen des Werkzeugs hervorgerufen werden könnte, ist sichergestellt, dass keine Komponente der Feineinstellvorrichtung verloren gehen kann.

Ein besonderer Vorteil des erfindungsgemäßen Werkzeugs besteht darin, dass die Feineinstellvorrichtung für den Schneideinsatz sehr wenig Bauraum beansprucht, wodurch die Möglichkeit eröffnet wird, das Werkzeug auch in der Ausführung mit kleinen Nenndurchmessern mit genormten (DIN/ISO-Norm) Wendeschneidplatten (WSP) zu bestücken. Bis hinunter zu Nenndurchmessern von 12 mm konnten genormte Wendeschneidplatten - beispielsweise der Größe 04 - eingesetzt werden, bei größeren Nenndurchmessern - von beispielsweise 16 mm - entsprechend größere Norm-WSP, beispielsweise der Größe 06. Den Erfindern ist es darüber hinaus gelungen, Werkzeuge mit einem Nenndurchmesser von 6 und 5 mm her zu stellen und die Feinjustierung des Schneideinsatzes dadurch zu bewirken, dass eine Gewindehülse mit einem Gewindemaß von M1.2 bzw. M0.8 verwendet wurde.

Vorteilhafte Weiterbildungen der Erfindung sind Gegenstand der Unteransprüche. Die Weiterbildung des Anspruch 2 ist besonders für extrem kleine Abmessung der Feineinstellvorrichtung geeignet, beispielsweise für Werkzeuge mit Nenndurchmesser unter 16 mm. Es hat sich gezeigt, dass mit Gewindehülsen-Durchmessern von unter 2 mm ohne weiteres Druckkräfte auf den Schraubbolzen und damit auf das Verstellelement ausgeübt werden können, die zur Feineinstellung der Schneide (n) selbst bei voller Befestigung des Schneideinsatzes in der Tasche ausreichen. Das Innengewinde der Gewindehülse kann sogar in Bereiche bis zu M0.8 ohne weiteres hergestellt werden, da die Materialwahl für die Komponenten der Feineinstellvorrichtung unabhängig vom Werkstoff des Schneideinsatzes und/oder des Schneidenträgers getroffen werden kann.

Eine vorteilhafte Alternative zur Gestaltung gemäß Anspruch 2 stellt die Weiterbildung gemäß Anspruch 3 dar. Diese Weiterbildung ist vorteilhafterweise dann anzuwenden, wenn Werkzeuge mit größerem Nenndurchmesser mit einer erfindungsgemäßen Feineinstellvorrichtung ausgestattet werden. Zur im wesentlichen drehfesten Aufnahme der Gewindehülse in der durchgehenden Ausnehmung kann eine Löt- oder Klebeverbindung verwendet werden. Es ist jedoch gleichermaßen möglich, die Verdrehsicherung der Gewindehülse durch besondere Gestaltung des Hülsenquerschnitts einerseits und des Querschnitts der durchgehenden Ausnehmung andererseits bereitzustellen.

Bei dieser Variante ist es von Vorteil, die lichte Weite der Engstelle kleiner zu wählen, als den Außendurchmesser des in die Gewindehülse eingeschraubten Schraubbolzens, damit für eine Verliersicherung gesorgt ist.

Um die Kraftübertragung von der Feineinstellvorrichtung auf das Schneidteil möglichst günstig zu beeinflussen, dienen die Weiterbildungen nach den Ansprüche 5 bis 7. Diese Weiterbildungen ermöglichen es, die Abmessungen der Feineinstellvorrichtung weiter zu verringern und damit Werkzeuge mit noch kleinerem Nenndurchmesser mit der erfindungsgemäßen Feineinstellvorrichtung auszurüsten, insbesondere dann, wenn als Material für den Schneidenträger ein Hartmetall oder ein anderer Hartstoff bzw. ein Material mit deutlich höherer Festigkeit und damit einhergehend deutlich schwierigerer Zerspanbarkeit ausgewählt wird.

Die Weiterbildung des Anspruchs 6 verbessert den Kraftfluss in den Schneidenträger und minimiert die Kontaktspannungen, die sich insbesondere bei Verwendung von Hartstoffen kritisch auswirken könnten.

Wenn der Schneideinsatz gemäß Anspruch 7 von einer Wendeschneidplatte gebildet ist, ist es vorteilhaft, wenn sich das Verstellelement an einer Freifläche der Wendeschneidplatte abstützt. Auf diese Weise wird nicht nur die Schneidkante geschont, sondern in vorteilhafter Weise auch die Schräge der Freifläche als Bestandteil eines Keilgetriebes in vorteilhafter Weise für eine Kraftumlenkung und Kraftverstärkung genutzt.

Grundsätzlich ist die erfindungsgemäße Gestaltung der Feineinstellvorrichtung nicht auf eine bestimmte Geometrie der Tasche im Schneidenträger bzw. des Schneideinsatzes beschränkt. Mit der Weiterbildung des Anspruchs 8 ergibt sich allerdings eine besonders gut definierte Lagejustierung des Schneideinsatzes bei möglichst guter Schonung des Schneideinsatzes einerseits und des Schneidenträgers andererseits.

Die im Schneidenträger zur Aufnahme der Stellschraubenanordnung vorgesehene durchgehende Ausnehmung kann bezüglich der Bodenfläche der Tasche des Schneidenträgers beliebig orientiert sein, und beispielsweise auch parallel zu der Bodenfläche der Tasche ausgerichtet sein. Wenn die durchgehenden Ausnehmung allerdings gemäß Anspruch 9 eine Erstreckung hat, die zur Bodenfläche der Tasche des Schneidenträgers unter einem Winkel angestellt ist, ergibt sich - insbesondere in Kombination mit dem Gegenstand des Anspruchs 7 - der besondere Vorteil, dass die Schräge der Freifläche für die Kraftumlenkung und Kraftübersetzung genutzt werden kann.

Auch für die Querschnittsgestaltung der durchgehenden Ausnehmung im Schneidenträger ergibt sich keine grundsätzliche Beschränkung. Der entscheidende herstellungstechnische Vorteil, insbesondere beim Einsatz von hochfesten Werkstoffen im Bereich des Schneidenträgers, ergibt sich dadurch, dass die Innenoberfläche der Ausnehmung keine Hinterschneidungen aufweisen muss, und dass an die Maßhaltigkeit der durchgehenden Innenausnehmung nur sehr geringe Anforderungen gestellt werden müssen, weil die Stellschraubenanordnung mit Spiel in der durchgehenden Ausnehmung aufgenommen ist. Besondere herstellungstechnische Vorteile ergeben sich mit der Weiterbildung des Anspruchs 10. Eine derartige Ausnehmung kann mit der ausreichenden geringen Maßhaltigkeit und groben Lagetoleranz sogar in den Werkzeugträger eingeformt werden, wenn dieser beispielsweise aus einem Sinterwerkstoff hergestellt wird. Die dabei erzielbare Lage- und Abmessungsgenauigkeit ist ohne weiteres ausreichend, um die Stellschraubenanordnung beliebiger Abmessungen verliersicher und gleichwohl zuverlässig von außen zugänglich in der durchgehenden Ausnehmung aufzunehmen.

Auch die Engstelle in der durchgehenden Ausnehmung kann auf vielfältige Art und Weise bereitgestellt werden, wie zum Beispiel durch Eintreiben eines in die Ausnehmung hineinragenden Querstifts. Eine besonders einfache und wirksame Ausgestaltung ergibt sich allerdings mit der Weiterbildung des Anspruchs 11. Entsprechend dieser Weiterbildung kann bei Einbringung der durchgehenden Innenausnehmung im Urformprozess, d.h. beim Pressvorgang des aus einem Hartstoff bestehenden Schneidenträgers jegliche Nachbearbeitung nach dem Sinterprozess entfallen.

In den Ansprüchen 12 und 13 sind vorteilhafte Werkstoffe für den Schneidenträger und/oder den Schneideinsatz angegeben, mit denen die Vorzüge der erfindungsgemäßen Gestaltung besonders gut ausgeschöpft werden. Es sei aber bereits an dieser Stelle hervorgehoben, dass die Erfindung nicht auf diese Materialwahl beschränkt ist.

Zumindest ausgewählte Funktionsflächen des Werkzeugs und/oder der Feinstellvorrichtung, vorzugsweise derjenigen Bereiche, die einem erhöhten Verschleiß ausgesetzt sind, können zur Verbesserung der Standzeit zumindest bereichsweise, wie zum Beispiel im Bereich der Schneiden oder im Bereich der kraftübertragenden Kontaktflächen mit einer Beschichtung versehen sein, die vorzugsweise als Hartstoffschicht ausgeführt. Dabei kann es sich beispielsweise um eine Schicht aus Diamant, vorzugsweise nanokristallienem Diamant aus Titan-Nitrid oder aus Titan-Aluminium-Nitrid handeln. Vorteilhafte Ausgestaltungen der Beschichtung sind Gegenstand der Ansprüche 17 bis 19.

Weitere vorteilhafte Ausgestaltungen der Erfindung sind Gegenstand der Unteransprüche.

Nachstehend werden anhand schematischer Zeichnungen Ausführungsbeispiele der Erfindung näher erläutert. Es zeigen:
Fig. 1 eine perspektivische Ansicht eines drehangetriebenen Zerspanungswerkzeugs zur Feinbearbeitung von Werkstücken zur Veranschaulichung des grundsätzlichen Aufbaus des Werkzeugs;
Fig. 2 eine schematische Draufsicht des vorderen Bereichs des Zerspanungswerkzeugs gemäß Fig. 1 in einem vergrößertem Maßstab;
Fig. 3 den Schnitt gemäß III-III in Fig. 2;
Fig. 4 eine Detailansicht der Stellschraubenanordnung der Ausführungsform gemäß Fig. 1 bis 3;
Fig. 5 die Ansicht entsprechend "V" in Fig. 4;
Fig. 6 und 7 perspektivische Ansichten der Stellschraubenanordnung gemäß Fig. 4 und 5;
Fig. 8 eine schematische perspektivische und teilweise aufgebrochene Ansicht einer modifizierten Ausführungsform des Zerspanungswerkzeugs; und
Fig. 9 eine schematische Schnittansicht (ähnlich der Fig. 3) einer weiteren Ausführungsform des Zerspanungswerkzeugs mit einer Abwandlung der Feineinstellvorrichtung für einen Schneideinsatz.

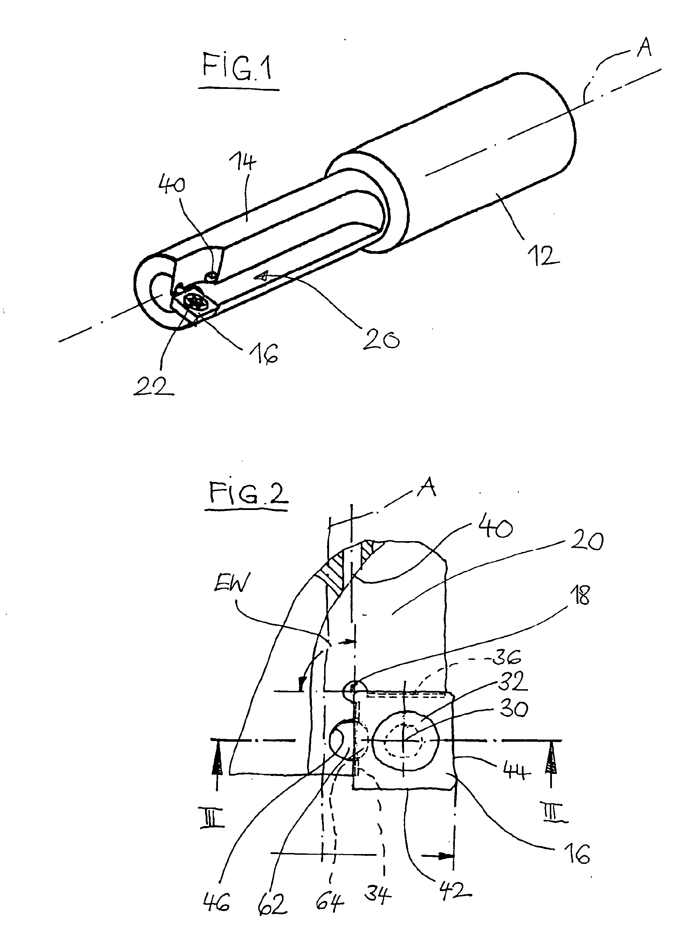

Fig. 1 zeigt schematisch ein vorzugsweise drehangetriebenes Zerspanungswerkzeug mit einem Schaft 12 und einem Schneidenträger 14. Der Schneidenträger 14 trägt an seinem vorderen Ende lösbar einen Schneideinsatz 16, der beispielsweise als Werkzeugwechselplatte bzw. Wendeschneidplatte ausgebildet ist.

Die Schneidplatte kann beispielsweise von einer bekannten Wendeschneidplatte (WSP) nach DIN/ISO - vorzugsweise bis zu Werkzeug-Nenndurchmessern von 12 mm - , aber gleichermaßen von einer Sonderplatte für kundenspezifische Anwendungsfälle gebildet sein. Bei einem Nenndurchmesser von 12 mm wird vorzugsweise eine WSP der Größe 04, bei einem Nenndurchmesser von 16 mm eine WSP der Größe 06 verwendet. Die Wendeschneidplatten bestehen vorzugsweise aus einem harten und verschleißfesten Werkstoff, wie z.B. aus Hartmetall (HM), Polykristallinem Diamant (PKD), Kubischem Bornidrid (CBN), Cermet, Keramik oder einem sonstigen Hartstoff, und können in allen Varianten beschichtet sein.

Im Einzelnen sitzt der Schneideinsatz 16 in einer winkelig ausgearbeiteten Tasche 18 eines mit 20 bezeichneten Spanraums. Der-Schneidenträger wird mittels einer Spannschraube 22 flächig gegen eine Bodenfläche 24 gedrückt. Die Anordnung ist vorzugsweise derart getroffen, dass eine Achse 26 eines die Spannschraube 22 aufnehmenden Innengewindes 28 der Spannschraube 22 bezüglich eines Zentrums 30 einer Senkung 32 im Schneideinsatz 16 zum innenliegenden Ecke der Tasche 18 hin leicht versetzt ist, wodurch sichergestellt ist, dass der Schneideinsatz 16 bei angezogener Spannschraube 22 fest und vorzugsweise flächig gegen Stützwände 34, 36 der Tasche 18 gedrückt wird.

Mit dem Bezugszeichen 40 ist die Mündung eines Kühl- und Schmiermittelkanals bezeichnet. Das vorstehend kurz beschriebene Zerspanungswerkzeug ist so ausgebildet, dass bei montiertem Schneideinsatz 16 die Schneiden 42, 44 in vorbestimmter Lagezuordnung zur Achse A zu liegen kommen. Dementsprechend ist die Tasche entsprechend aus dem Spanraum 20 herausgearbeitet, vorzugsweise derart, dass die Stützwände 34, 36 miteinander einen Winkel einschließen, der dem Eckenwinkel EW des Schneideinsatzes 16 entspricht. Da derartige Zerspanungswerkzeuge hauptsächlich zur Feinbearbeitung von Werkstücken eingesetzt werden, ist dafür Sorge zu tragen, dass Toleranzen bei der Herstellung des Schneideinsatzes 16 und/oder der den Schneideinsatz aufnehmenden Tasche 18 ausgeglichen werden können. Zu diesem Zweck ist eine Feineinstellvorrichtung vorgesehen, die nachfolgend anhand der Fig. 3 bis 7 näher beschrieben wird.

Grundsätzlich ist die Anordnung derart getroffen, dass die Integration der Feineinstellvorrichtung in das Zerspanungswerkzeug eine minimale Bearbeitung, insbesondere eine minimale Zerspanungsbearbeitung im Bereich des Schneidenträgers 14 erfordert, so dass im Bereich des Schneidenträgers Werkstoffe mit deutlich höherer Festigkeit, wie zum Beispiel Hartstoffe, d.h. Hartmetall oder Cermet-Werkstoffe eingesetzt werden können.

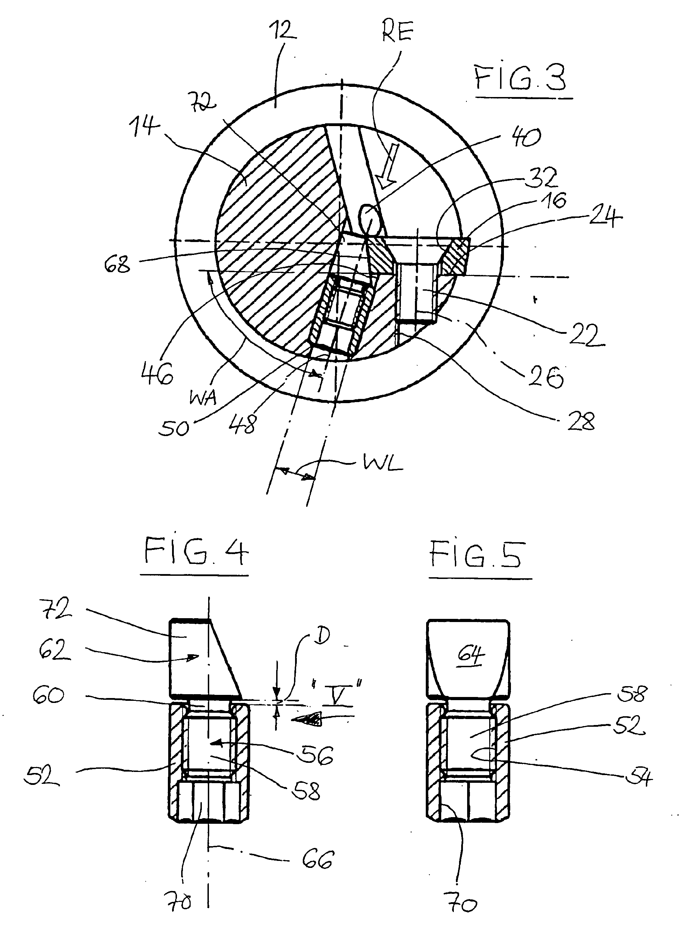

Wie in den Fig. 2 bis 7 gezeigt, ist im Schneidenträger 20 eine durchgehende Ausnehmung 46 vorgesehen, die im gezeigten Ausführungsbeispiel als zylindrische, gestufte Ausnehmung mit einer Achse 48 gestaltet ist, welche zur Ebene der Bodenfläche 24 unter einem Winkel WA angestellt ist. Aufgrund der gestuften Ausbildung der zylindrischen Ausnehmung 46 hat die Ausnehmung 46 somit eine mit 50 bezeichnete Engstelle, die von der Materialschulter der gestuften Innenausnehmung 46 gebildet ist. Die lichte Weite der Engstelle 50 ist - wie aus Fig. 3 ersichtlich - mit WL bezeichnet. In die mit der Engstelle 50 versehene durchgehende und innenseitig glatte, d.h. ohne Hinterschneidungen, ausgebildete Ausnehmung 46 ist eine Stellschraubenanordnung gemäß Fig. 4 bis 7 mit Spiel eingesetzt, und zwar von der dem Schneideinsatz 16 zugewandten Seite der Ausnehmung 46 aus. Die Einsatzrichtung ist in Fig. 3 mit dem Pfeil RE bezeichnet.

Die Stellschraubenanordnung besteht aus zwei Teilen, nämlich einer Gewindehülse 52 und einem mit deren Innengewinde in Funktionseingriff stehenden Schraubteil 56, dessen Gewindeabschnitt 58 über eine Stufe 60 in einen keilartig angeschrägten Kopf 62 übergeht. Die schräge Keilfläche 64 des Kopfes 62 ist derart zur Mittelachse 66 orientiert, dass sie im eingesetzten und unter Druck gesetzten Zustand der Stellschraubenanordnung 52, 56 flächig mit einer Freifläche 68 des Schneideinsatzes 16 in Anlagekontakt bringbar ist.

Um eine Feineinstellung- des Schneideinsatzes 16 zum Ausgleichen von Fertigungstoleranzen bzw. zur Beseitigung von eventuell noch vorhandenem Spiel zwischen Spannschraube 22 und Schneideinsatz 16 vorzunehmen, wird der keilartig angeschrägte Kopf 62 des Schraubteils 56 flächig mit zunehmender Kraft gegen die Freifläche 68 des Schneideinsatzes 16 gedrückt, indem die mit radialem Spiel in die zylindrische Innenausnehmung 46 eingesetzte Gewindehülse 52 derart gedreht wird, dass sich der Abstand D zwischen Kopf 62 und Gewindehülse 52 vergrößert. Zu diesem Zweck ist die Gewindehülse 52 auf der der Engstelle 50 zugewandten Seite mit einer Innensechskantausnehmung 70 ausgestattet, deren Schlüsselweite nicht größer ist als die lichte Weite WL der Engstelle 50. Damit bleibt die Stellschraubenanordnung 52, 56 durch die Engstelle hindurch betätigbar.

Wie in den Fig. 2 und 3 gezeigt, stützt sich der der Keilfläche 64 abgewandte Umfangsoberflächenabschnitt 72 im wesentlichen flächig an der Innenwandung der Ausnehmung 46 ab, wodurch die über die Keilflächen 68, 64 übertragenen und verstärkten Druckkräfte mit günstigem Kraftfluss in den Schneidenträger 14 eingeleitet werden können, selbst wenn der Innendurchmesser der Ausnehmung 46 geringfügig größer ist als der Außendurchmesser des Verstellkopfes 62.

Die Besonderheit der vorstehend beschriebenen Feineinstellvorrichtung besteht somit darin, dass auf Seiten des Schneidenträgers 14 ein Minimum an Bearbeitungsaufwand betrieben werden muss, um die Feineinstellvorrichtung in das Werkzeug zu integrieren. Mit anderen Worten, die auf Seiten des Schneidenträgers erforderlichen Funktionsflächen sind äußert einfach zu gestalten, insbesondere ohne erforderliche Zerspanungsbearbeitung, da sie frei von jedweden Hinterschneidungen gehalten werden können und weil die Anforderungen an die Lage- und Maßtoleranz der durchgehenden Ausnehmung 46 verhältnismäßig grob sein können, ohne die Funktionsfähigkeit der Feineinstellvorrichtung zu gefährden. Mit anderen Worten, auch die Achse 48 der Ausnehmung 46 muss nicht exakt mit der Achse 66 der Stellschraubananordnung 52, 56 zusammenfallen, um dennoch eine sehr wirksame und den Schneideinsatz schonende Radialeinstellung vornehmen zu können.

Durch die vorstehend beschriebenen, erfindungsgemäßen Maßnahmen gelingt es, eine Feinverstellung der Schneideinsätze auch bei solchen Werkzeugen einzusetzen, bei denen der Schneidenträger nur mit extrem hohen Aufwand bearbeitbar ist. Dies ist beispielsweise dann der Fall, wenn es sich um äußerst hochfeste Materialien, wie zum Beispiel Hartstoffe, insbesondere um einen Sinterwerkstoff, wie zum Beispiel einem Hartmetall ohder einem Cermet-Werkstoff handelt. Wenn derartige Hartstoffe, inbesondere Sinterwerkstoffe für den Schneidenträger 14 eingesetzt werden, erlaubt es das vorstehend beschriebene, erfindungsgemäße Konzept der Ausgestaltung der Feineinstellvorrichtung, die in den Schneidenträger einzubringende Ausnehmung 46 zusammen mit der Engstelle 48, bereits im Sinterrohling auszubilden, ohne dass es einer Nachbearbeitung, insbesondere einer Innen-Nachbearbeitung des Fertigteils bedarf. Denn bezüglich Lage und Form der Ausnehmung 46 und der Engstelle 50 sind keine hohen Maßanforderungen zu erfüllen.

Es hat sicher herausgestellt, dass die in den Fig. 2 bis 7 gezeigte Stellschraubenanordnung selbst dann noch in der Lage ist, ausreichend große Verstellkräfte auf den Schneideinsatz aufzubringen, wenn die Stellschraubenanordnung mit kleinsten Abmessungen, wie zum Beispiel mit einem Gewindehülsen-Außendurchmesser von unter 2 mm vorliegt. Das Innengewinde 54 der Gewindehülse 52 kann ohne weiteres als Gewinde der Größe M0.8 ausgeführt werden. Bei kleinen Gewindegrößen verwendet man vorzugsweise ein Feingewinde, während bei größeren Gewinden Regulärgewinde verwendet werden können. Diese kleine Dimensionierung der Stellschraubenanordnung erlaubt es, drehangetriebene Zerspanungswerkzeuge auch dann mit fein einstellbaren Schneideinsätzen auszustatten, wenn der Nenndurchmesser des Werkzeugs wesentlich kleiner als 16 mm, und sogar kleiner als 6 mm ist und wenn als Material für den Schneidenträger ein äußerst hochfestes Material, wie zum Beispiel wie ein Hartstoff verwendet wird. Besonders bevorzugt ist die Verwendung von Sinterwerkstoffen, da es die einfache Gestaltung der Ausnehmung 46, 50 ermöglicht, diese beim Formpressvorgang, beispielsweise unter Zuhilfenahme eines geeigneten Kerns, d.h. im Urformprozess in den Schneidenträger einzubringen, so dass nach dem Sintervorgang keine weitere Bearbeitung mehr erforderlich ist.

Folgende Werkzeuge lassen sich mit der erfindungsgemäßen Feineinstellvorrichtung besonders wirtschaftlich und effektiv herstellen:
1. Nenndurchmesser 16 mm mit DIN/ISO-WSP der Größe 06
2. Nenndurchmesser 12 mm mit DIN/ISO-WSP der Größe 04
3. Nenndurchmesser 6 mm mit Sonder-WSP; Gewindemaß der Gewindehülse M1.2;
4. Nenndurchmesser 5 mmm mit Sonder-WSP; Gewindemaß der Gewindehülse M0.8.

Zur zusätzlichen - Verbesserung der Bearbeitungsqualität ist der Schneideinsatz 16 zumindest im Bereich der am höchsten beanspruchten Abschnitte, d.h. im Bereich der Schneidkanten 42, 44 und Rundschlifffasen mit einer Beschichtung versehen, die vorzugsweise als Hartstoffschicht ausgebildet ist. Für diese Hartstoffschicht kommt z.B. Diamant, vorzugsweise nanokristalliner Diamant in Frage, Titan-Nitrid- oder Titan-Aluminium-Nitrid. Besonders geeignet sind u.a. eine Titan-Aluminium-Nitrid-Schicht und eine sogenannte Mehrlagen-Schicht, die unter der Bezeichnung "Fire I" von der Firma Gühring oHG vermarktet wird. Dabei handelt es sich um eine TiN-/(Ti, Al)N-Mehrlagens-Schicht. Eine Beschichtung - als Weich- und/oder Hartschicht kann auch im Bereich der Feineinstellvorrichtung verwendet werden.

Besonders bevorzugt kann - sowohl im Bereich des Schneideinsatzes als auch im Bereich der Feineistellvorrichtung - eine Verschleißschutzschicht zur Anwendung kommen, die im wesentlichen aus Nitriden mit den Metallkomponenten Cr, Ti und Al und vorzugsweise einem geringen Anteil von Elementen zur Kornverfeinerung besteht, wobei der Cr-Anteil bei 30 bis 65 %, vorzugsweise 30 bis 60 %, besonders bevorzugt 40 bis 60 %, der Al-Anteil bei 15 bis 35 %, vorzugsweise 17 bis 25 %, und der Ti-Anteil bei 16 bis 40 %, vorzugsweise 16 bis 35 %, besonders bevorzugt 24 bis 35 %, liegt, und zwar jeweils bezogen auf alle Metallatome in der gesamten Schicht. Dabei kann der Schichtaufbau einlagig sein mit einer homogenen Mischphase oder er kann aus mehreren in sich homogenen Lagen bestehen, die abwechselnd einerseits aus (TiₓAl_{y}Y_{z})N mit x = 0,38 bis 0,5 und y = 0,48 bis 0,6 und z = 0 bis 0,04 und andererseits aus CrN bestehen, wobei vorzugsweise die oberste Lage der Verschleißschutzschicht von der CrN-Schicht gebildet ist.

Die vorstehend beschriebene Beschichtung kann auch im Bereich der Funktionsflächen 54, 56, 64 der Feineinstellvorrichtung 52, 56 zumindest bereichsweise vorgesehen sein. Aber auch eine Weichstoffschicht, wie sie beispielsweise aus der eigenen älteren Patentanmeldung P 100 52 681.0 bekannt ist, deren Offenbarung ausdrücklich in die vorliegende Anmeldung einbezogen wird, kann entweder alternativ oder in Kombination mit der Hartstoffschicht vorgesehen werden.

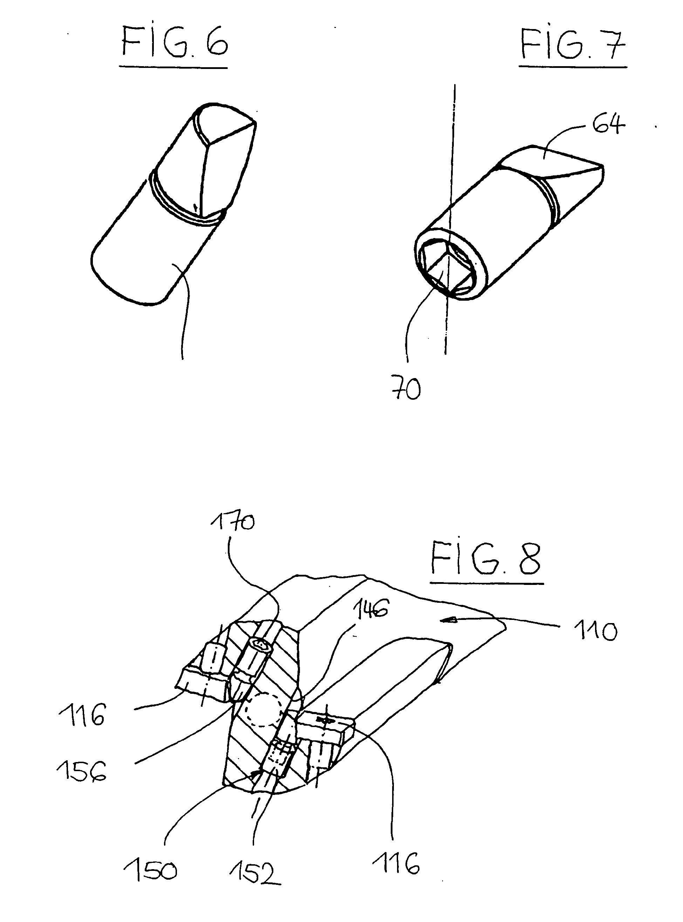

In Fig. 8 ist eine weitere Ausführungsform eines Zerspanungswerkzeugs, nämlich eines drehangetriebenen Zerspanungswerkzeugs gezeigt. Zur Vereinfachung der Beschreibung sind diejenigen Komponenten, die den Bauteilen der Ausführungsform nach den Fig. 1 bis 7 entsprechen mit ähnlichen Bezugszeichen versehen, denen eine "1" vorangestellt ist.

Der hauptsächliche Unterschied zur Ausführungsform nach den Fig. 1 bis 7 besteht darin, dass das Werkzeug 110 mit zwei Schneideinsätzen 116 bestückt ist. Jedem Schneideinsatz 116 ist eine Stellschraubenanordnung bestehend aus Gewindehülse 152 und Schraubteil 156 zugeordnet. Diese Stellschraubenanordnung ist wiederum jeweils in eine gestufte Ausnehmung 146 mit einer Engstelle 150 von der dem Schneideinsatz 116 zugewandten Seite der Ausnehmung 146 eingesetzt. Die Innensechskantausnehmung 170 ist von der anderen Seite durch die Engstelle 150 hindurch zugänglich, so dass eine Feinjustierung des Schneideinsatzes 116 möglich ist.

Wie auch bei der Ausführungsform nach den Fig. 1 bis 7 ergibt sich mit der Variante nach Fig. 8 der zusätzliche Vorteil, dass die Stellschraubenanordnung 152, 156 bei monitiertem Schneideinsatz 116 verliersicher in der Ausnehmung 146 aufgenommen ist.

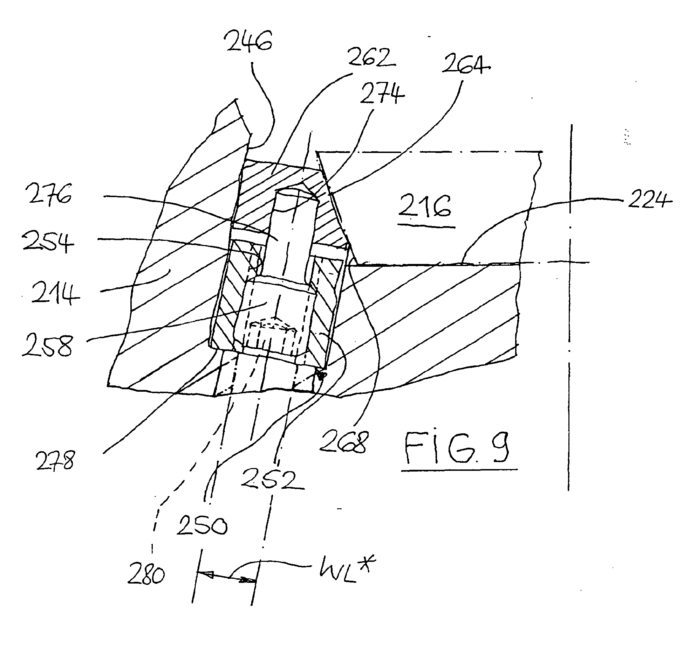

Schließlich wird anhand der Fig. 9 eine weitere Ausführungsform des Zerspanungswerkzeugs beschrieben. Auch hier sind diejenigen Bauteile, die den Komponenten der zuvorbeschriebenen Ausführungsbeispielen entsprechen, mit ähnlichen Bezugszeichen bezeichnet, denen allerdings eine "2" vorangestellt ist. Auch hier wird der Schneideinsatz 216 von einem keilförmig abgeschrägtem Verstellkörper 262 beaufschlagt, der sich mit seiner Keilfläche 264 flächig an einer Freifläche 268 des Schneideinsatzes 216 abstützt. Der Verstellkörper 262 ist formschlüssig, aber mit Spiel in einer gestuften Innenausnehmung 246 des Schneidenträgers 214 aufgenommen. Der Verstellkörper 262 nimmt seinerseits in einer zentrischen Sackbohrung 274 einen zylindrischen Stiftabschnitt 276 auf, der in einen Gewindeabschnitt 258 übergeht. Der Gewindeabschnitt 258 steht in Funktionseingriff mit einem Innengewindet 254 einer lose bzw. mit Spiel in die Ausnehmung 246 eingesetzten Gewindehülse 252, die sich an einer Schulter 278 der durchgehenden Ausnehmung 246 abstützt. Durch die Schulter 278 wird somit eine Engstelle 250 gebildet, durch die hindurch eine Innensechskantausnehmung des Gewindeabschnitts 258 betätigbar ist.

Vorzugsweise ist die Gewindehülse 252 in der Ausnehmung 246 verdrehgesichert, beispielsweise durch Einkleben oder Einlöten geschieht. Es ist aber auch möglich, die Gewindehülse formschlüssig in einer entsprechend gestalteten oder ausgestatteten Ausnehmung 246 verdrehsicher festzulegen. Mit durchgezogenen Linien ist in Fig. 9 diejenige Variante angedeutet, bei der die Engstelle 250 der Ausnehmung 246 eine lichte Weite hat, die größer ist als das Außengewinde des Gewindeabschnitts 258. Mit strichpunktierten Linien ist eine Modifikation angedeutet, bei der die lichte Weite WL* kleiner ist als der Außendurchmesser des Gewindeabschnitts 258, wodurch sich auch bei dieser Variante eine vollständige Verliersicherung der Stellschraubenanordnung sicherstellen läßt.

Im übrigen gelten für die Ausführungsform nach Fig. 9 diejenigen Vorteile, die im Zusammenhang mit der Ausführungsform nach den Fig. 1 bis beschrieben wurden. Die Ausgestaltung nach Fig. 9 läßt sich dann vorteilhaft einsetzten, wenn Werkzeuge mit größerem Nenndurchmesser mit der Feineinstellvorrichtung des Schneideinsatzes ausgestattet werden sollen.

Selbstverständlich sind Abweichungen von den beschriebenen Ausführungsformen möglich, ohne den Grundgedanken der Erfindung zu verlassen. So ist es beispielsweise möglich, die Gewindehülse 252 auch dadurch im wesentlichen verdrehsicher in der Ausnehmung 246 zu halten, dass eine entsprechende Anpassung der Querschnitte der Gewindehülse 252 einerseits und der Innenausnehmung 246 andererseits bereit gestellt wird, beispielsweise ein Polygonquerschnitt. Entscheidend ist lediglich, dass die Gewindehülse ebenso wie der Verstellkörper 262 mit gewissem radialem Spiel in der Ausnehmung 246 aufgenommen werden können, wodurch es ermöglicht wird, die Innenausnehmung mit Engstelle ohne komplizierte und maßgenaue Bearbeitung des Schneidenträgers selbst dann herzustellen, wenn letzterer aus besonders hochfestem Material hergestellt ist.

Es können auch andere Verdrehsicherungen, wie zum Beispiel Indexstifte Anwendung finden, die beispielsweise von außen in den Schneidenträger verliersicher eingesetzt werden.

Bei den beschriebenen Ausführungsformen ist die Engstelle von einer Materialschulter gebildet. Dies ist nicht zwingend erforderlich. Es ist gleichermaßen möglich, die Ausnehmung durchgehend mit gleichbleibendem Querschnitt auszubilden und die Engstelle dadurch zu gestalten, dass von außen Stützkörper, beispielsweise Stifte soweit eingetrieben werden, dass sich die Gewindehülse zuverlässig abstützen kann.

Die Feineinstellvorrichtung legt bei den gezeigten Ausführungsformen in einem im wesentlichen zylindrischen Schneidenträger. Sie kann aber auch in einer Kassette liegen, die zur Fertigstellung des Werkzeugs in einen Kassettenträger eingebaut wird.

Die Erfindung ist auch nicht auf einen besonderen Werkzeugtyp beschränkt. Es ist auch denkbar, das Werkzeug als stehendes Werkzeug zu verwenden, wenngleich die besonderen Vorzüge dann zum Tragen kommen, wenn das Werkzeug als drehangetriebenes Feinbearbeitungswerkzeug verwendet wird.

Es kann auch vorgesehen sein, dass der Schneideinsatz in mehreren Richtungen eingestellt wird. In diesem Fall werden einem Schneideinsatz mehrere Feineinstellvorrichtungen zugeordnet.

Auch hinsichtlich der Orientierung der durchgehenden Ausnehmung bezüglich der Bodenfläche bzw. bezüglich der Kontaktfläche am Schneideinsatz kann die Anordnung in weiten Grenzen variiert werden.

Der Schneidenträger der vorstehend beschriebenen Ausführungsbeispiele besteht aus einem Hartstoff, insbesondere einem Sinterwerkstoff, wie z. B. einem Hartmetall oder einem Cermet-Werkstoff. Damit kann insbesondere den Kriterien Abriebverschleiß und Warmhärte in besonderem Maße Rechnung getragen werden. Es können aber auch andere hochfeste Werkstoffe Anwendung finden, wie z.B. HSS, HSSE, HSSEBM oder dgl. hochfeste Stahlwerkstoffe.

Die verwendeten Hartstoffe können in Form eines Carbids, eines Nitrids, eines Borids oder eines nichtmetallischen Hartstoffs bzw. eines Hartstoffsystems vorliegen, wie es beispielsweise in Form von Mischcarbiden, Carbonnitriden, Carbid-Borid-Kombinationen oder Mischkeramik und Nitridkeramik bekannt geworden ist. Besonders vorteilhaft sind dabei diejenigen Hartstoffe einzusetzen, die als Sinter-Formteile hergestellt werden können. Dabei kann die Ausnehmung 46, 146 oder 246 im Schneidenträger abweichend von den zuvor beschriebenen Varianten auch dadurch hergestellt werden, dass ein vorgesinterter Körper, der im Vergleich zum fertig gesinterten Teil noch verhältnismäßig einfach zu bearbeiten ist, mit einer Stufenbohrung versehen wird.

## Patentansprüche

1. Werkzeug, vorzugsweise drehangetriebenes Zerspanungswerkzeug, insbesondere zur Feinbearbeitung von Werkstücken, bei dem zumindest ein Schneideinsatz (16; 116; 216) lösbar in einer Tasche (18) eines Schneidenträgers (14; 114; 214) befestigt ist, indem er flächig gegen eine Bodenfläche (24; 224) der Tasche (18) gespannt wird, wobei dem Schneideinsatz (16; 116; 216) zur Einstellung einer Schneide (42, 44) eine Feineinstellvorrichtung zugeordnet ist, mit der unter Zuhilfenahme einer Stellschraubenanordnung (52, 56; 152, 156; 252, 258) ein sich an einer Seitenwand (68; 268) des Schneideinsatzes (16; 116; 216) abstützendes Verstellelement (62; 262) relativ zum Schneideinsatz (16; 116; 216) verlagerbar ist, **dadurch gekennzeichnet, dass** die Stellschraubenanordnung (52, 56; 152, 156; 252, 258) eine in einer durchgehenden und glatten Ausnehmung (46; 146; 246) mit einer Engstelle (50; 150; 250, 250*) vorzugsweise mit Spiel aufgenommene Gewindehülse (52; 152; 252) und ein damit in Funktionseingriff stehendes Schraubteil (56; 156; 258) aufweist, das mit dem Verstellelement (62; 262) in einer Druckkraftkette steht, wobei die Stellschraubenanordnung (52, 56; 152, 156; 252, 258) von der der Bodenfläche (24; 224) zugewandten Seite in die durchgehende Ausnehmung (46; 146; 246) eingesetzt und von der anderen Seite durch die Engstelle (50; 150; 250, 250*) hindurch betätigbar ist.

2. Werkzeug nach Anspruch 1, **dadurch gekennzeichnet, dass** die Engstelle (50; 150; 250, 250*) eine lichte Weite (WL) hat, die kleiner ist als der Außendurchmesser der Gewindehülse (52; 152), und dass das Schraubteil (56; 156) der Stellschraubenanordnung (52, 56; 152, 156) von einem Schraubbolzen gebildet ist, dessen Gewindeabschnitt (58) über eine Stufe (60) in einen vorzugsweise keilartig angeschrägten Kopf (62) übergeht, der das Verstellelement bildet.

3. Werkzeug nach Anspruch 1, **dadurch gekennzeichnet, dass** das Schraubteil (258) von einem mit der in der durchgehenden Ausnehmung (246) im Wesentlichen drehfest aufgenommenen Gewindehülse (252) in Eingriff stehenden Schraubbolzen gebildet ist, dessen Gewindeabschnitt (258) in einen zylindrischen Stiftabschnitt (276) übergeht, welcher mit Spielpassung in eine Sackausnehmung (274) eines vorzugsweise seitlich abgeschrägten verstellkörpers (262) eingreift, der das Verstellelement bildet.

4. Werkzeug nach Anspruch 3, **dadurch gekennzeichnet, dass** die Engstelle (250) eine lichte Weite (WL*) hat, die kleiner ist als der Außendurchmesser des Schraubbolzens (258).

5. Werkzeug nach einem der Ansprüche 1 bis 4, **dadurch gekennzeichnet, dass** das Verstellelement (62; 162; 262) flächig an der Seitenwand (68; 268) des Schneideinsatzes (16; 116; 216) anliegt.

6. Werkzeug nach einem der Ansprüche 1 bis 5, **dadurch gekennzeichnet, dass** sich das Verstellelement (62; 162; 262) auf der dem Schneideinsatz (16; 116; 216) abgewandten Seite weitgehend flächig an einer Innenwandung der durchgehenden Ausnehmung (46; 146; 246) abstützt.

7. Werkzeug nach einem der Ansprüche 1 bis 7, **dadurch gekennzeichnet, dass** der Schneideinsatz (16; 116; 216) von einer Wendeschneidplatte gebildet ist, und sich das Verstellelement (62; 162; 262) an einer Freifläche (68; 268) abstützt.

8. Werkzeug nach einem der Ansprüche 1 bis 7, **dadurch gekennzeichnet, dass** die Tasche (18) zur Aufnahme des Schneideinsatzes (16; 116; 216) zwei Stützwände (34, 36) aufweist, die miteinander einen einem Eckenwinkel (EW) des Schneideinsatzes (16; 116; 216) entsprechenden Winkel einschließen.

9. Werkzeug nach einem der Ansprüche 1 bis 8, **dadurch gekennzeichnet, dass** die durchgehende Ausnehmung (46; 146; 246) im Schneidenträger (14; 114; 214) eine Erstreckung entlang einer Achse (48) hat, die zur Bodenfläche (24) der Tasche (18) des Schneidenträgers (14; 114; 214) unter einem Winkel (WA) angestellt ist.

10. Werkzeug nach Anspruch 9, **dadurch gekennzeichnet, dass** die durchgehende Ausnehmung (46; 146; 246) von einer im Wesentlichen zylindrischen Ausnehmung gebildet ist.

11. Werkzeug nach einem der Ansprüche 1 bis 10, **dadurch gekennzeichnet, dass** die Engstelle (50; 150; 250, 250*) in der durchgehenden Ausnehmung (46; 146; 246) von einer Materialschulter gebildet ist.

12. Werkzeug nach einem der Ansprüche 1 bis 11, **dadurch gekennzeichnet, dass** der Schneidenträger (14; 114; 214) von einem Hartstoff, vorzugsweise einem Sinterwerkstoff, wie z. B. einem Hartmetall oder einem Cermet-Werkstoff gebildet ist.

13. Werkzeug nach Anspruch 12, **dadurch gekennzeichnet, dass** als Hartstoff ein Carbid, ein Nitrid, ein Borid oder ein nichtmetallischer Hartstofs bzw. ein Hartstoffsystem gewählt ist, wie es beispielsweise in Form von Mischcarbiden, Carbonnitriden, Carbid-Borid-Kombinationen oder als Mischkeramik und Nitridkeramik bekannt geworden ist.

14. Werkzeug nach einem der Ansprüche 1 bis 13, **dadurch gekennzeichnet, dass** das Innengewinde (54; 254) der Gewindehülse (52; 152; 252) eine Größe im Bereich von M0.8 bis M16, vorzugsweise von M1.2 bis M16 hat.

15. Werkzeug nach einem der Ansprüche 1 bis 14, **dadurch gekennzeichnet, dass** zumindest ausgewählte, einem erhöhten Verschleiss ausgesetzte Funktionsflächen des Werkzeugs, wie z.B. des Schneideinsatzes (16; 116; 216) und/oder der Feineinstellvorrichtung (46, 52, 5662, 64; 254, 258, 274, 276, 262) mit einer Beschichtung versehen sind.

16. Werkzeug nach Anspruch 15, **dadurch gekennzeichnet, dass** die Beschichtung in der Ausgestaltung als Hartstoffschicht vorliegt.

17. Werkzeug nach Anspruch 16, **dadurch gekennzeichnet, dass** die Hartstoffschicht aus Diamant, vorzugsweise nanokristallinem Diamant, aus TiN oder aus (Ti, Al)N, einer Mehrlagen-Schicht oder einer Schicht bestehend aus Nitriden mit den Metallkomponenten Cr, Ti und Al und vorzugsweise einem geringen Anteil von Elementen zur Kornverfeinerung besteht, wobei der Cr-Anteil bei 30 bis 65 %, vorzugsweise 30 bis 60 %, besonders bevorzugt 40 bis 60 %, der Al-Anteil bei 15 bis 35 %, vorzugsweise 17 bis 25 %, und der Ti-Anteil bei 16 bis 40 %, vorzugsweise 16 bis 35 %, besonders bevorzugt 24 bis 35 %, liegt, und zwar jeweils bezogen auf alle Metallatome in der gesamten Schicht.

18. Werkzeug nach Anspruch 17, **dadurch gekennzeichnet, dass** der Aufbau der gesamten Schicht aus einer homogenen Mischphase besteht.

19. Werkzeug nach Anspruch 17, **dadurch gekennzeichnet, dass** der Aufbau der gesamten Schicht aus mehreren in sich homogenen Einzellagen besteht, die abwechselnd einerseits aus (TiₓAl_{y}Y_{z})N mit x = 0,38 bis 0,5 und y = 0,48 bis 0,6 und z = 0 bis 0,04 und andererseits aus CrN bestehen, wobei vorzugsweise die oberste Lage der Verschleißschutzschicht von der CrN-Schicht gebildet ist

20. Werkzeug nach einem der Ansprüche 1 bis 19, **dadurch gekennzeichnet, dass** der Schneideinsatz von einer DIN/ISO-Wendeschneidplatte gebildet ist.

21. Werkzeug nach einem der Ansprüche 1 bis 20, **dadurch gekennzeichnet, dass** der Schneideinsatz aus einem harten und/oder verschleißfestem Werkstoff, wie z.B. aus Hartmetall (HM), Polykristallinem Diamant (PKD), Kubischem Bornidrid (CBN), Cermet, Keramik oder einem sonstigen Hartstoff besteht.

## Claims

1. A tool, preferably a rotarily driven cutting tool, particularly for the fine machining of workpieces, in which at least one cutting insert (16; 116; 261) is detachably fixed in a pocket (18) of a cutter carrier (14; 114; 214) by being clamped flat against a bottom surface (24; 224) of the pocket (18), wherein a fine adjustment device is associated with the cutting insert (16; 116; 216) for adjusting a cutter (42, 44), with which device an adjusting element (62; 262), supported on a lateral wall (68; 268) of the cutting insert (16; 116; 216), is displaceable relative to the cutting insert (16; 116; 216) by means of an adjusting screw arrangement (52; 56; 152, 156; 252, 258), **characterised in that** the adjusting screw arrangement (52, 56; 152, 156; 252, 258) has a threaded sleeve (52; 152; 252) preferably received with clearance in a smooth through recess (46; 146; 246) with a constriction (50; 150; 250, 2508), and a screw section (56; 156; 258) functionally engaging with it, which section is in a compressive force chain with the adjusting element (62; 22), wherein the adjusting screw arrangement (52; 56; 152, 156; 252, 258) is inserted in the through recess (46; 146; 246) from the side facing the bottom surface (24; 224), and can be actuated from the other side through the constriction (50; 150; 250, 250*).

2. The tool according to Claim 1, **characterised in that** the constriction (50; 150; 250, 250*) has a clearance (WL) which is smaller than the outside diameter of the threaded sleeve (52; 152), and **in that** the screw section (56; 156) of the adjusting screw arrangement (52, 56; 152, 156) is formed by a screw bolt whose threaded section (58) passes via a stage (60) into a head preferably bevelled into a wedge shape, which head forms the adjusting element.

3. The tool according to Claim 1, **characterised in that** the screw section (258) is formed by a screw bolt received in an essentially fixed manner in the through recess (246), the threaded section (252) of which bolt passes into a cylindrical pin section (276) which engages with a clearance fit in a pocket recess (274) of a preferably laterally bevelled adjusting body (262) which forms the adjusting element.

4. The tool according to Claim 3, **characterised in that** the constriction (250) has a clearance (WL*) which is smaller than the outside diameter of the screw bolt (258).

5. The tool according to any one of Claims 1 to 4, **characterised in that** the adjusting element (62; 162; 262) lies flat against the lateral wall (68; 268) of the cutting insert (16; 116; 216).

6. The tool according to any one of Claims 1 to 5, **characterised in that** the adjusting element (62; 162; 262) is supported largely flat against an inner wall of the through recess (46; 146; 246) on the side facing away from the cutting insert (16; 116; 216).

7. The tool according to any one of Claims 1 to 7, **characterised in that** the cutting insert (16; 116; 216) is formed by a disposable insert, and **in that** the adjusting element (62; 162; 262) is supported on a free surface (68; 268).

8. The tool according to any one of Claims 1 to 7, **characterised in that** the pocket (18) for receiving the cutting insert (16; 116; 216) has two supporting walls (34, 36) which together form an angle corresponding to a corner angle (EW) of the cutting insert (16; 116; 216).

9. The tool according to any one of Claims 1 to 8, **characterised in that** the through recess (46; 146; 246) in the cutter carrier (14; 114; 214) has an extension along an axis (48) which is adjusted to the bottom surface (24) of the pocket (18) of the cutter carrier (14; 114; 214) at an angle (WA).

10. The tool according to Claim 9, **characterised in that** the through recess (46; 146; 246) is formed by an essentially cylindrical recess.

11. The tool according to any one of Claims 1 to 10, **characterised in that** the constriction (50; 150; 250, 250*) in the through recess (46; 146; 246) is formed by a material shoulder.

12. The tool according to any one of Claims 1 to 11, **characterised in that** the cutter carrier (14; 114; 214) is formed from a hard material, preferably a sinter material, e.g. a had metal or Cermet material.

13. The tool according to Claim 12, **characterised in that** a carbide, a nitride, a boride or a non-metallic hard material or hard material system is selected as the hard material such as has become known, for example, in the form of mixed carbides, carbon nitrides, carbide-boride combinations or as mixed ceramic and nitride ceramic.

14. The tool according to Claims 1 to 13, **characterised in that** the female thread (54; 254) of the threaded sleeve (52; 152, 252) ranges from M0.8 to M16 in size, preferably from M1.2 to M16.

15. The tool according to any one of Claims 1 to 14, **characterised in that** at least selected functional surfaces of the tool exposed to increased wear, e.g. those of the cutting insert (16; 116; 216) and/or the fine adjustment device (46, 52, 566, 62, 64; 254, 258, 274, 276, 262) are provided with a coating.

16. The tool according to Claim 15, **characterised in that** the coating is provided in the form of a coat of hard material.

17. The tool according to Claim 16, **characterised in that** the coat of hard material consists of diamond, preferably nanocrystalline diamond, TiN or (T9,Al)N, a multi-layer coat or coat consisting of nitrides with the metal components Cr, Ti and Al, and preferably a low proportion of elements for grain refinement, wherein the Cr proportion is 30 to 65%, preferably 30 to 60$ and in particular preference 40 to 60%, the Al proportion is 15 to 35%, preferably 17 to 25%, and the Ti proportion is 16 to 40%, preferably 16 to 35%, and in particular preference 24 to 35%, in all cases related to all the metal atoms throughout the coat.

18. The tool according to Claim 17, **characterised in that** the structure of the entire coat consists of a homogeneous mixed phase.

19. The tool according to Claim 17, **characterised in that** the structure of the entire coat consists of several intrinsically homogeneous individual layers which consist alternately of (TiₓAl_{y}Y) N with x = 0.38 to 0.25, y = 0.48 to 0.6 and z = 0 to 0.04 on the one hand, and of CrN on the other, wherein the uppermost layer of the wear protection coat is formed from the CrN coat.

20. The tool according to any one of Claims 1 to 19, **characterised in that** the cutting insert is formed from a DIN/ISO disposable insert.

21. The tool according to any one of Claims 1 to 20, **characterised in that** the cutting insert consists of a hard and/or wear resistant material, e.g. of hard metal (HM), polycrystalline diamond (PCD), cubic boron nitride (CBN), Cermet, ceramic or another hard material.

## Revendications

1. Outil, de préférence outils d'enlèvement de copeaux entraîné en rotation, notamment pour l'usinage de précision de pièces, dans lequel au moins une garniture de coupe (16 ; 116 ; 216) est fixée de manière amovible dans une poche (18) d'un porte-lame (14 ; 114 ; 214) du fait qu'elle est serrée en contact avec une surface de fond (24 ; 224) de la poche (18), étant associé à la garniture de coupe (16 ; 116 ; 216), pour régler une lame (42, 44), un dispositif de réglage de précision qui, avec l'assistance d'un système de vis de réglage (52, 56 ; 152, 258), permet de décaler un élément de réglage (62 ; 262) s'appuyant à une paroi latérale (68 ; 268) de la garniture de coupe (16 ; 116, 216) par rapport à la garniture de coupe (16 ; 116 ; 216), **caractérisé en ce que** le système de vis de réglage (52, 56 ; 152, 156 ; 252, 258) comporte un manchon fileté (52 ; 152, 252) reçu dans un évidement continu et lisse (46 ; 146 ; 246) présentant un rétrécissement (50 ; 150 ; 250, 250*) et un élément vis (56 ; 156 ; 258) en liaison fonctionnelle avec celui-ci et qui se situe dans une chaîne de force de compression avec l'élément de réglage (62 ; 262), tandis que le système de vis de réglage (52, 56 ; 152, 156 ; 252, 258) est inséré par le côté tourné vers la surface de fond (24 ; 224) dans l'évidement continu (46 ; 146 ; 246) et peut être actionné de l'autre côté à travers le rétrécissement (50 ; 150 ; 250, 250*).

2. Outil selon la revendication 1, **caractérisé en ce que** le rétrécissement (50 ; 150 ; 250, 250*) a un diamètre intérieur (WL) qui est plus petit que le diamètre extérieur du manchon fileté (52 ; 152) et que l'élément vis (52 ; 156) du système de vis de réglage (52, 56; 152, 156) est constitué par une vis cylindrique dont la section filetée (58) transite par un étage (60) dans une tête (62) de préférence biseautée en forme de coin (62) et qui constitue l'élément de réglage.

3. Outil selon la revendication 1, **caractérisé en ce que** l'élément vis (258) est constitué par une vis cylindrique en engrènement avec un manchon fileté (252) reçu sensiblement de manière fixe en rotation dans l'évidement continu (246) et dont la section filetée (258) transite dans une section de tige cylindrique (276) qui s'engrène par un ajustement à jeu dans un évidement borgne (274) d'un corps de réglage (262) de préférence biseauté latéralement et constituant l'élément de réglage.

4. Outil selon la revendication 3, **caractérisé en ce que** le rétrécissement (250) a un diamètre intérieur (WL*) qui est plus petit que le diamètre extérieur de la vis cylindrique (258).

5. Outil selon une des revendications 1 à 4, **caractérisé en ce que** l'élément de réglage (62 ; 162 ; 262) est en contact surfacique avec la paroi latérale (68 ; 268) de la garniture de coupe (16 ; 116 ; 216).

6. Outil selon une des revendications 1 à 5, **caractérisé en ce que** l'élément de réglage (62 ; 162 ; 262) s'appuie sur le côté tourné vers la garniture de coupe (16 ; 116 ; 216) en contact largement surfacique avec une paroi intérieure de l'évidement continu (46 ; 146 ; 246).

7. Outil selon une des revendications 1 à 7, **caractérisé en ce que** la garniture de coupe (16 ; 116 ; 216) est constituée d'une plaque de coupe tournante et que l'élément de réglage (62 ; 162 ; 262) s'appuie sur une surface libre (68 ; 268).

8. Outil selon une des revendications 1 à 7, **caractérisé en ce que** la poche (18) destinée à recevoir la garniture de coupe (16 ; 116 ; 216) présente deux parois de soutien (34, 36) qui circonscrivent entre elles un angle correspondant à un angle de pointe (EW) de la garniture de coupe (16 ; 116 ; 216).

9. Outil selon une des revendications 1 à 8, **caractérisé en ce que** l'évidement continu (46 ; 146 ; 246) du porte-lame (14 ; 114 ; 214) s'étend le long d'un axe (48) qui est approché vers la surface de fond (24) de la poche (18) du porte-lame (14 ; 114 ; 214) suivant un angle (WA).

10. Outil selon la revendication 9, **caractérisé en ce que** l'évidement continu (46 ; 146 ; 246) est constitué par un évidement sensiblement cylindrique.

11. Outil selon une des revendications 1 à 10, **caractérisé en ce que** le rétrécissement (50 ; 150, 250, 250*) est formé dans l'évidement continu (46 ; 146 ; 246) par un épaulement de matière.

12. Outil selon une des revendications 1 à 11, **caractérisé en ce que** le porte-lame (14 ; 114 ; 214) est constitué d'une substance dure, de préférence un matériau fritté, comme par exemple un métal dur ou un matériau de cermet.

13. Outil selon la revendication 12, **caractérisé en ce qu'**il est choisi comme substance dure un carbure, un nitrure, un borure ou une substance dure non métallique ou un système composé de substances dures, comme ceux qui se sont fait connaître par exemple sous forme de carbures mélangés, nitrures de carbone, combinaisons de carbure-borure ou sous forme de céramique mélangée et céramique au nitrure.

14. Outil selon une des revendications 1 à 13, **caractérisé en ce que** le filetage intérieur (54 ; 254) du manchon fileté (52 ; 152 ; 252) a une taille de l'ordre de M0,8 à M16, de préférence de M1,2 à M16.

15. Outil selon une des revendications 1 à 14, **caractérisé en ce qu'**au moins des surfaces fonctionnelles sélectionnées et exposées à une usure accrue de l'outil, comme par exemple de la garniture de coupe (16 ; 116 ; 216) et/ou du dispositif de réglage de précision (46, 52, 5662, 64 ; 254, 258, 274, 276, 262) sont pourvues d'un revêtement.

16. Outil selon la revendication 15, **caractérisé en ce que** le revêtement est réalisé sous forme d'une couche de substance dure.

17. Outil selon la revendication 16, **caractérisé en ce que** la couche de substance dure est composée de diamant, de préférence de diamant nanocristallin, de TiN ou de (Ti, Al)N, d'une couche à plusieurs épaisseurs ou d'une couche composée de nitrures contenant les composants métalliques Cr, Ti et Al et de préférence une faible proportion d'éléments d'affinage de grains, la proportion de Cr allant de préférence de 30 à 65 %, de préférence 30 à 60 %, de manière particulièrement préférentielle 40 à 60 %, la proportion d'Al de 15 à 35 %, de préférence 17 à 25 %, et la proportion de Ti de 16 à 40 %, de préférence 16 à 35 %, de manière particulièrement préférentielle 24 à 35 %, et ce respectivement par rapport à tous les atomes métalliques de l'ensemble de la couche.

18. Outil selon la revendication 17, **caractérisé en ce que** la structure de l'ensemble de la couche est composée d'une phase homogène de mélange.

19. Outil selon la revendication 17, **caractérisé en ce que** la structure de l'ensemble de la couche est composée de plusieurs couches individuelles homogènes en soi, qui sont composées alternativement de (TiₓAl_{y}Y_{z}) avec x = 0,38 à 0,5 et y = 0,48 à 0,6 et z = 0 à 0,04 et d'autre part de CrN, l'épaisseur supérieure de la couche d'usure étant constituée par la couche de CrN.

20. Outil selon une des revendications 1 à 19, **caractérisé en ce que** la garniture de coupe est constituée d'une plaque de coupe tournante DIN/ISO.

21. Outil selon une des revendications 1 à 20, **caractérisé en ce que** la garniture de coupe est composée d'un matériau dur et/ou résistant à l'usure, comme par exemple de métal dur (HM), diamant polycristallin (PKD), nitrure de bore cubique (CBN), cermet, céramique ou d'une autre substance dure.
